Europäisches Patentamt

European Patent Office

Office européen des brevets

(19)

(11) Veröffentlichungsnummer: **0 206 269**
**B1**

(12) **EUROPÄISCHE PATENTSCHRIFT**

(45) Veröffentlichungstag der Patentschrift:
14.11.90

(51) Int. Cl.⁵: **C09J 161/20, C08L 61/30**

(21) Anmeldenummer: 86108400.2

(22) Anmeldetag: 19.06.86

(54) Pulverförmiges Aminoplastleimharz für Holzwerkstoffe oder als Papierklebemittel mit geringer Formaldehydabspaltung, Verfahren zu dessen Herstellung und konfektioniertes, pulverförmiges Aminoplastleimharz.

(30) Priorität: 22.06.85 DE 3522358

(43) Veröffentlichungstag der Anmeldung:
30.12.86 Patentblatt 86/52

(45) Bekanntmachung des Hinweises auf die Patenterteilung:
14.11.90 Patentblatt 90/46

(84) Benannte Vertragsstaaten:
AT BE DE FR GB IT NL SE

(56) Entgegenhaltungen:
WO-A-83/04037
FR-A- 2 313 427
US-A- 3 535 199
US-A- 3 827 995
US-A- 4 417 925

CHEMICAL ABSTRACTS, Band 89, Nr. 12,
September 1978, Seite 31, Zusammenfassung
Nr. 90701u, Columbus, Ohio, US; &
JP-A-78 46 347 (MATSUSHITA ELECTRIC WORKS,
LTD) 08-10-1976

(73) Patentinhaber: BASF Aktiengesellschaft,
Carl-Bosch-Strasse 38, D-6700 Ludwigshafen(DE)

(72) Erfinder: Kraus, Friedrich, Dr., Volkerstrasse 33,
D-6140 Bensheim(DE)
Erfinder: Matthias, Günther, Dr., Meergartenweg 25 a,
D-6710 Frankenthal(DE)
Erfinder: Wittmann, Otto, Max-Beckmann-Strasse 13 b,
D-6710 Frankenthal(DE)
Erfinder: Diem, Hans, Dr., Kniebisstrasse 16,
D-6800 Mannheim 1(DE)

**Beschreibung**

Die Erfindung betrifft ein pulverförmiges Aminoplastleimharz für Holzwerkstoffe oder als Papierklebemittel, insbesondere für die Herstellung von Spanplatten oder für Flächenverleimungen mit geringer Formaldehydabspaltung, ein Verfahren zur Herstellung des Aminoplastleimharzes, sowie ein fertig konfektioniertes, Aminoplastleimharz.

Pulverförmige Leimharze sind dann wichtig, wenn die Transportkosten für wäßrige Leimharzlösungen zu hoch sind im Vergleich mit den Kosten einer Sprühtrocknung. In den letzten Jahren sind allgemein formaldehydarme Leimharze immer wichtiger geworden, insbesondere für die Herstellung von Spanplatten. Der Grund ist eine gewisse Belästigung durch den stechenden Geruch von Formaldehyd und bei höheren Konzentrationen das Auftreten von Reizerscheinungen. Die Herstellung formaldehydarmer Aminoharze in Pulverform ist sehr schwierig und bis heute ein ungelöstes Problem gewesen. Dafür gibt es zwei Gründe: Erstens enthalten formaldehydarme Leimharzlösungen Komponenten, die an der Sprühtrocknerwand ankleben, schmelzen, herunterlaufen oder auf den Filtern ankleben, diese verstopfen und nach kurzer Zeit dadurch einen starken Druckanstieg bewirken, der zum Abbruch der Produktion führt. Aber selbst bei Inkaufnahme dieses Nachteils führt die Anklebung der formaldehydarmen Pulverbestandteile zu einer Trennung in formaldehydreiche und -arme Komponenten und manerreicht nicht das Ziel der Formaldehydarmut im fertigen Produkt. Auch die Vermischung von formaldehydreichen mit formaldehydarmen Komponenten, im äußersten Fall mit Harnstoff, führt nicht zu einem handhabbaren Pulverharz, da diese Mischung nicht lagerstabil ist und letztlich zu schwierig aufzulösenden Festkörpern führt. Eine weitere Schwierigkeit entsteht aus der mangelhaften Klebkraft von sehr formaldehydarmen Leimharzen. Bei Flüssigharzen wird dieses Problem durch spezielle Kondensationstechniken gelöst, indem man bei hohen Formaldehydgehalten, d.h. hohen Molverhältnissen Formaldehyd zu Harnstoff beginnt und im Verlaufe der Kondensation durch stufenweise Zugabe von Harnstoff immer weiter im Molverhältnis hinabsteigt. Bei höheren Ansprüchen bezüglich Festigkeit und Quellbeständigkeit modifiziert man das Harz mit Melamin. Dabei werden diese Harze, ob modifiziert oder nicht, mit Alkoholen umgesetzt, wobei man annimmt, daß ein Teil der Hydroxymethylgruppen unter Wasserabspaltung verethert wird. Diese stufenweise Absenkung des Molverhältnisses ist aus obigen Gründen bei der Sprühtrocknung der zu trocknenden Harzlösung nicht durchführbar. Auch die gemeinsame Trocknung aller Harz-Komponenten eines Melaminharzes bessert das Problem nicht.

Der Erfindung liegt die Aufgabe zugrunde, erstmals ein pulverförmiges Aminoplastleimharz für Holzwerkstoffe mit geringer Formaldehydabspaltung, sowie Verfahren zur Herstellung des Aminoplastleimharzes zur Verfügung zu stellen.

Diese Aufgabe wird gelöst mit einem pulverförmigen Aminoplastleimharz der genannten Art, das dadurch gekennzeichnet ist, daß das Harz eine Mischung aus

a) 40 bis 75 Gew.-Teilen eines Harnstoff-Formaldehydharzes mit einem molaren Verhältnis von Harnstoff : Formaldehyd von 1:1,4 bis 1:2;
b) 10 bis 20 Gew.-Teilen eines Melamin-Formaldehydharzes mit einem molaren Verhältnis von Melamin : Formaldehyd von 1:1,3 bis 1:3;
c) 15 bis 25 Gew.-Teilen gemahlenem Harnstoff und
d) 0,3 bis 10, insbesondere 0,3 bis 5 Gew.-Teilen eines hydrophoben oder hydrophilen Siliciumdioxid,

sowie bis zu 10 Gew.-Teilen Wasser und gegebenenfalls bis zu 10 Gew.-Teilen an anderen Zusätzen, ist, wobei sich die Gewichtsteile dieser Komponenten zu einem Wert von 100 addieren.

Nach einer bevorzugten Ausführungsform ist das pulverförmige Aminoplastleimharz dadurch gekennzeichnet, daß es eine Mischung aus

a) 60 bis 68 Gew.-Teilen eines Harnstoff-Formaldehydharzes mit einem molaren Verhältnis von Harnstoff : Formaldehyd von 1:1,4 bis 1:1,8;
b) 12 bis 16 Gew.-Teilen eines Melamin-Formaldehydharzes mit einem molaren Verhältnis von Melamin : Formaldehyd von 1:1,3 bis 1:1,8;
c) 16 bis 22 Gew.-Teilen gemahlenem Harnstoff und
d) 0,5 bis 2 Gew.-Teilen eines hydrophoben oder hydrophilen Siliciumdioxid,

sowie bis zu 10 Gew.-Teilen Wasser und gegebenenfalls bis zu 10 Gew.-Teilen an anderen Zusätzen, ist.

Besonders bevorzugt ist ein pulverförmiges Aminoplastleimharz der genannten Art, das dadurch gekennzeichnet ist, daß

a) das Harnstoff-Formaldehydharz ein molares Verhältnis von Harnstoff : Formaldehyd von etwa 1:1,6 aufweist und
b) das Melamin-Formaldehydharz ein molares Verhältnis von Melamin : Formaldehyd von etwa 1:1,5 aufweist.

Besonders zweckmäßig weist der Harnstoff eine mittlere Korngröße von weniger als 0,1 mm auf. Die Korngröße kann auch viel kleiner sein, bis zu 0,02 mm.

Als Fließhilfsmittel d) enthält das Aminoplastleimharzpulver ein hydrophobes oder ein hydrophiles Siliciumdioxid.

Das erfindungsgemäße Aminoplastleimharz kann zusätzlich noch andere Zusätze enthalten, insbesondere solche, die für Aminoplastleimharze üblich sind. Es kann einen Restwassergehalt aufweisen, der bei der Harnstoff-Formaldehydharz-Komponente und der Melamin-Formaldehydharz-Komponente jeweils 0,1 bis 2 Gew.% ausmachen kann.

Das Verfahren zur Herstellung des pulverförmigen Aminoplastleimharzes ist dadurch gekennzeichnet, daß man das Harnstoff-Formaldehydharz und das Melamin-Formaldehydharz getrennt voneinander sprühtrocknet und bei einer Temperatur von weniger als 30°C zusammen mit dem Harnstoff und dem Fließhilfsmittel vermischt.

Als besonders vorteilhaft hat es sich herausgestellt, wenn das pulverförmige Aminoplastleimharz als Zusatz ein lösliches Sulfit oder Hydrogensulfit in einer Menge von 0,2 bis 2 Gew.-Teilen, bezogen auf die Gesamtmenge der Harzkomponenten, enthält. Besonders zweckmäßig handelt es sich hierbei um ein Alkali- oder Ammoniumsulfit oder -hydrogensulfit. Besonders bevorzugt verwendet man Natriumsulfit $Na_2SO_3$. Ein bevorzugter Bereich für die Menge an Sulfit oder Hydrogensulfit liegt zwischen 0,5 und 1 Gew.-Teilen, insbesondere bei etwa 0,7 Gew.-Teilen, bezogen auf die Gesamtmenge der Harzkomponenten. Das Sulfit oder Hydrogensulfit kann in Pulverform oder in Lösung zugesetzt werden.

Die Zugabe des Sulfits oder Hydrogensulfits führt zu einem Absenken der Viskosität der aus dem Leimpulver bereiteten Lösungen, so daß diese leichter handhabbar werden. Überdies wird die Wassermischbarkeit des Aminoplastleimharzes erhöht, schließlich ist es nicht erforderlich, bei der Herstellung der zu trocknenden Harzlösung bei Zusatz von Sulfit oder Hydrogensulfit den pH-Wert des Harzleimansatzes beim Zufügen von Harnstoff zur Harzlösung stetig nachzustellen.

Nach einem alternativen Verfahren zur Herstellung des erfindungsgemäßen pulverförmigen Aminoplastleimharzes gemäß einer bevorzugten Ausführungsform, welche 3 bis 10 Gew.-Teile hydrophiles Siliciumdioxid (Kieselsäure) als Fließhilfsmittel enthält, geht man folgendermaßen vor: Man stellt eine Mischung aus Harnstoff-Formaldehydharz und Melamin-Formaldehydharz her, indem man vorzugsweise Lösungen der beiden Harze vermischt, freien Harnstoff und 3 bis 10 Gew.-Teile hydrophiles Siliciumdioxid, z.B. ein Handelsprodukt, das unter der Bezeichnung Sipernat 22® erhältlich ist, in der zu trocknenden Lösung löst bzw. suspendiert und dann diese Mischung sprühtrocknet.

Der mit dem alternativen Verfahren erzielte Effekt ist überraschend. Wenn der Harnstoff durch Umhüllung vor dem Schmierigwerden an der Turmwand geschützt werden sollte, dann hätte ein Fachmann eher eine hydrophobe Verbindung ausgewählt. Denn eine hydrophile Verbindung umhüllt sich mit Wasser, und es wäre danach die Bildung von schmierigen Körpern zu erwarten gewesen. Bei dieser Verfahrensvariante entfällt der zusätzliche Arbeitsgang des Vermischens der Leimharzkomponenten nach dem Sprühtrocknen, der bei der ersten Verfahrensvariante erforderlich ist. Außerdem entfällt die getrennte Lagerung und Abkühlung der Komponenten.

Die Erfindung betrifft auch ein konfektioniertes pulverförmiges Aminoplastleimharz, enthaltend ein pulverförmiges Aminoplastleimharz der zuvor definierten Art. Ein derartiges konfektioniertes, pulverförmiges Aminoplastleimharz ist bereits mit einem Härter gemischt und kann so ansatzfertig gelagert und ausgeliefert werden. Gewünschtenfalls enthält das konfektionierte pulverförmige Aminoplastleimharz auch einen Fugenfüller, beispielsweise ein Mehl.

Gegenstand der Erfindung ist ferner eine Abmischung aus dem wie zuvor definierten Aminoplastleimharz und anderen, üblichen Klebemitteln. Unter üblichen Klebemitteln sind beispielsweise organische Klebstoffe natürlichen oder synthetischen Ursprungs gemeint.

Das erfindungsgemäße Aminoplastleimharz oder dessen Abmischungen kann beispielsweise auch als Papierklebemittel dienen. Hierunter versteht man ein Klebemittel für Papier, Kraftpapier, Karton, Wellpappe und vergleichbare Werkstoffe.

Der in konfektioniertem pulverförmigem Aminoplastleimharz verwendete Härter muß so beschaffen sein, daß er nicht mit der pulverförmigen Harzmischung reagiert, sondern erst in der wäßrigen Leimflotte bzw. in dem Holzwerkstoff, der Spanplatte oder Furnierplatte, den Härtungsvorgang bewirkt. Geeignete Härter lassen sich ohne weiteres unter den bekannten Härtern des Standes der Technik auswählen. Besonders geeignete Beispiele für derartige Härter sind: Ammoniumsalze starker anorganischer Säuren, gegebenenfalls gemischt mit Mehlen, Stärke, Kaolin, hochkondensierten Leimharzen auf Basis Harnstoff oder Melamin, pulverförmige organische Säuren wie Maleinsäure, Fumarsäure, Zitronensäure, Weinsäure, Stearinsäure, pulverisierte Nußschalen, Kokosnußschalen, Olivenkerne.

Die Harnstoff-Formaldehydharz-Komponente muß Leimeigenschaften aufweisen. Der Methylolgruppengehalt soll 15 bis 20 Gew.% betragen, die Gelierzeit soll bei 15 bis 20 Minuten bei 50°C mit 10% einer 15%igen $NH_4Cl$-Lösung bei einer 2:1-Lösung in Wasser sein.

Die Melamin-Formaldehydharz-Komponente soll ebenfalls Leimeigenschaften aufweisen. Der Methylolgruppengehalt soll bei 20 bis 28 Gew.% liegen. Die Gelierzeit soll 35 bis 40 Minuten in einer 1:1-Lösung in Wasser mit 10% einer 15%igen $NH_4Cl$-Lösung bei 40°C betragen.

Zur Herstellung einer bevorzugten Ausführungsform des pulverförmigen Aminoplastleimharzes wird eine Harnstoff-Formaldehydharz-Lösung zu einem Pulver mit einem Restwassergehalt von 0,1 bis 2 Gew.% sprühgetrocknet und dann mit einem durch Sprühtrocknung einer Melamin-Formaldehydharz-Lösung auf denselben Restwassergehalt von 0,1 bis 2 Gew.% getrockneten pulverförmigen Harz, sowie gemahlenen Harnstoff und hydrophoben oder hydrophilem Siliciumdioxid nach Vorkühlung des aus dem heißen Sprühtrockner austretenden pulverförmigen Harzes bei einer Temperatur unter 30°C vermischt. Eine besonders bevorzugte Mischung kann beispielsweise die folgende Zusammensetzung aufweisen:

65 Gew.-Teile Harnstoff-Formaldehydharz mit einem molaren Verhältnis von Harnstoff : Formaldehyd von etwa 1:1,6;

15 Gew.-Teile Melamin-Formaldehydharz mit einem molaren Verhältnis von Melamin : Formaldehyd von etwa 1:1,5;

17 Teile Harnstoff und

0,85 Teile $SiO_2$.

Eine Veretherung der Harzkomponenten ist nicht erforderlich.

Das erfindungsgemäße pulverförmige Aminoplastleimharz zeichnet sich durch folgende Eigenschaften aus:
gute Wiederauflösbarkeit,
gute Spanplattenqualitäten, mechanische Eigenschaften und geringe Formaldehydabspaltung, wobei uner mechanischen Eigenschaften gute Quellfetigkeit und gute mechanische Scherfestigkeit verstanden werden,
Lagerbarkeit ohne Qualitätsverlust, d.h. ohne Verklumpung und unter Erhaltung der Leimeigenschaften.

Die nachfolgenden Beispiele und die Vergleichsbeispiele dienen zur weiteren Erläuterung der Erfindung.

Beispiel 1

65 Teile eines pulverförmigen Harnstoff-Formaldehyd-Kondensationsproduktes mit einem Molverhältnis von 1 Mol Harnstoff zu 1,6 Mol Formaldehyd und einem Methylolgruppengehalt von 17% und einer Gelierzeit von 17 Minuten in einer Lösung von 2 Teilen Pulver und 1 Teil Wasser wurden in einem Mischer vorgelegt. Dann wurden 15 Teile eines pulverförmigen Melaminharzes mit einem Molverhältnis von 1 Teil Melamin zu 1,5 Teilen Formaldehyd und einem Methylolgruppengehalt von 25% und einer Gelierzeit einer 1:1-Lösung in Wasser von 40 Minuten hinzugemischt. Die Mischung wurde mit 17 Teilen gemahlenem Harnstoff und 0,85 Teilen hydrophobem Siliciumdioxid der Marke Sipernat D 17® (Degussa) versetzt und gut gemischt.

495 Teile einer Mischung von 2 Teilen dieses Pulvers und 1 Teil Wasser wurden mit 50 Teilen einer 20%igen Ammoniumchloridlösung und 55 Teilen Wasser zu einer Leimflotte angesetzt. Die Gelierzeit der Flotte bei 100°C betrug 149 Sekunden. Fichtenspäne wurden mit soviel Flotte gemischt, daß die Spänemischung 6% Festharz enthielt. Die Späne wurden bei 180°C und mit 4 Minuten Preßzeit zu einer Spanplatte von 18,7 mm Dicke gepreßt.

Die Prüfung ergab:
Dichte: 653 kg/m³
Scherfestigkeit: 1,72 N/mm²
Quellung nach 2 Stunden: 29,1%
Quellung nach 24 Stunden: 34,7%
Formaldehydabgabe (FESYP): 6 mg HCOH/100 g atro (absolut trockene) Platte

Vergleichsbeispiel 1

Eine analog dem erfindungsgemäßen Beispiel 1 hergestellte Platte unter Verwendung von nur 3 Teilen Melaminharz anstelle von 15 Teilen ergibt bei sonst gleichen Eigenschaften eine 2-Stunden-Quellung von 31,5% und eine 24-Stunden-Quellung von 38%.

Vergleichsbeispiel 2

Eine analog dem erfindungsgemäßen Beispiel 1 hergestellte Harzmischung ohne das Siliciumdioxid ließ sich nach einigen Tagen nicht mehr auflösen und daher nicht mehr zu einer Platte verarbeiten.

Vergleichsbeispiel 3

Eine analog dem erfindungsgemäßen Beispiel 1, jedoch ohne zusätzlichen Harnstoff hergestellte Platte ergab eine Formaldehydabspaltung von mehr als 10 mg HCOH/100 g atro Platte.

Beispiel 2

Lösung A

In einem Rührkessel wurde ein Vorkondensat aus 12 792 kg Formaldehyd ber. 100% und 895,5 kg Harnstoff fest, gelöst in 1791 kg Wasser, 733 l Formaldehyd 40% entspr. 324,5 kg ber. 100%, 1135 l einer 68,9%igen Harnstoff-Lösung = 920 kg Harnstoff fest, 237 l einer 25%igen Ammoniaklösung = 53,8 kg NH₃ 100% sowie 800 l Wasser vorgelegt. Nach Aufheizen auf 96°C wurde die Lösung 10 Minuten bei dieser Temperatur belassen und danach mit 10%iger Ameisensäure ein pH von 6,4 eingestellt. Es wurde so lange kondensiert, bis eine Trübungstemperatur einer 1:8 mit Wasser verdünnten Lösung von 15°C erreicht war. Dann wurden 865 l einer 68,9%igen Harnstoff-Lösung = 691 kg Harnstoff fest zugefügt. Der pH-Wert lag jetzt bei 5,4. Es wurde weiterkondensiert bei 96°C bis zur Trübungstemperatur einer 1:8 mit Wasser verdünnten Lösung von 38°C. Mit 25%iger Natronlauge wurde der pH-Wert auf 9,0 eingestellt und die Lösung abgekühlt.

Lösung B

In einem Rührkessel wurden 583 l Formaldehyd 40% = 258 kg Formaldehyd 100% und 305 l Wasser vorgelegt und mit 25%iger Natronlauge ein pH-Wert von 9,2 eingestellt. Anschließend wurden 677 kg Melamin hinzugefügt und der Kessel auf 96°C erwärmt. Dann wurde so lange kondensiert, bis eine Trübungstemperatur einer 1:5 mit Wasser verdünnten Lösung von 40°C erreicht war. Anschließend wurden 147 l Wasser zugegeben und die Lösung abgekühlt.

Lösung A und B wurden gemischt und der Mischung 1276 l einer 68,9%igen Harnstofflösung = 1020 kg Harnstoff fest sowie 297 kg hydrophiles Siliciumdioxid (Sipernat 22®) zugesetzt. Der Feststoffgehalt der Lösung betrug 51%.

Nach 12stündigem Stehen wurde die Lösung sprühgetrocknet. Bei einer Turmausgangstemperatur von 84°C wurden stündlich 600 kg Pulver mit einer Restfeuchte von ca. 1% erhalten.

Die 2:1-Lösung des Pulvers in Wasser hatte folgende Eigenschaften:
pH 7,6
Viskosität bei 20°C 3.500 mPa.s
Gelierzeit bei 70°C mit einer 10%igen Ammonchloridlösung: 31 Minuten

668 Teile einer Mischung von 2 Teilen dieses Pulvers und 1 Teil Wasser wurden mit 64 Teilen einer 20%igen Ammoniumchloridlösung und 70 Teilen Wasser zu einer Leimflotte angesetzt. Die Gelierzeit der Flotte bei 100°C betrug 147 Sekunden. Fichtenspäne wurden mit soviel Flotte gemischt, daß die

Spänemischung 6% Festharz enthielt. Die Späne wurden bei 180°C und mit 4 Minuten Preßzeit zu einer Spanplatte von 17,5 mm Dicke gepreßt.

Die Prüfung ergab:

Dichte: 646 kg/m³
Scherfestigkeit: 1,85 N/mm²
Quellung nach 2 Stunden: 26,7%
Quellung nach 24 Stunden: 30,5%
Formaldehydabgabe (FESYP): 5 mg HCOH/100 g atro (absolut trockene) Platte

## Patentansprüche

1. Pulverförmiges Aminoplastleimharz für Holzwerkstoffe mit geringer Formaldehydabspaltung, dadurch gekennzeichnet, daß das Harz eine Mischung aus
   a) 40 bis 75 Gew.-Teilen eines Harnstoff-Formaldehydharzes mit einem molaren Verhältnis von Harnstoff : Formaldehyd von 1:1,4 bis 1:2;
   b) 10 bis 20 Gew.-Teilen eines Melamin-Formaldehydharzes mit einem molaren Verhältnis von Melamin : Formaldehyd von 1:1,3 bis 1:3;
   c) 15 bis 25 Gew.-Teilen gemahlenem Harnstoff und
   d) 0,3 bis 10 Gew.-Teilen eines hydrophoben oder hydrophilen Siliciumdioxids,
sowie bis zu 10 Gew.-Teilen Wasser und gegebenenfalls bis zu 10 Gew.-Teilen an anderen Zusätzen, ist, wobei sich die Gew.-Teile der Komponenten zu einem Wert von 100 addieren.

2. Pulverförmiges Aminoplastleimharz nach Anspruch 1, dadurch gekennzeichnet, daß es eine Mischung aus
   a) 60 bis 68 Gew.-Teilen eines Harnstoff-Formaldehydharzes mit einem molaren Verhältnis von Harnstoff : Formaldehyd von 1:1,4 bis 1:1,8;
   b) 12 bis 16 Gew.-Teilen eines Melamin-Formaldehydharzes mit einem molaren Verhältnis von Melamin : Formaldehyd von 1:1,3 bis 1:1,8;
   c) 16 bis 22 Gew.-Teilen gemahlenem Harnstoff und
   d) 0,5 bis 2 Gew.-Teilen eines hydrophilen oder hydrophoben Siliciumdioxids,
sowie bis zu 10 Gew.-Teilen Wasser und gegebenenfalls bis zu 10 Gew.-Teilen an anderen Zusätzen, ist.

3. Pulverförmiges Aminoplastleimharz nach einem der Ansprüche 1 oder 2, dadurch gekennzeichnet, daß
   a) das Harnstoff-Formaldehydharz ein molares Verhältnis von Harnstoff : Formaldehyd von etwa 1:1,6 aufweist und
   b) das Melamin-Formaldehydharz ein molares Verhältnis von Melamin : Formaldehyd von etwa 1:1,5 aufweist.

4. Pulverförmiges Aminoplastleimharz nach einem der Ansprüche 1 bis 3, dadurch gekennzeichnet, daß der Harnstoff eine mittlere Korngröße von weniger als 0,1 mm aufweist.

5. Pulverförmiges Aminoplastleimharz nach einem der Ansprüche 1 bis 4, dadurch gekennzeichnet, daß das Fließhilfsmittel ein hydrophobes Siliciumdioxid ist.

6. Pulverförmiges Aminoplastleimharz nach einem der Ansprüche 1 bis 4, dadurch gekennzeichnet, daß das Fließhilfsmittel ein hydrophiles Siliciumdioxid ist.

7. Pulverförmiges Aminoplastleimharz nach einem der Ansprüche 1 bis 6, dadurch gekennzeichnet, daß es als Zusatz ein lösliches Sulfit oder Hydrogensulfit in einer Menge von 0,2 bis 2 Gew.-Teilen, bezogen auf die Gesamtmenge der Harzkomponenten, enthält.

8. Pulverförmiges Aminoplastleimharz nach Anspruch 7, dadurch gekennzeichnet, daß es ein Alkali- oder Ammoniumsulfit oder -hydrogensulfit enthält.

9. Pulverförmiges Aminoplastleimharz nach einem der Ansprüche 1 bis 8, dadurch gekennzeichnet, daß es 3 bis 10 Gew.-Teile hydrophiles Siliciumdioxid (Kieselsäure) als Fließhilfsmittel enthält.

10. Verfahren zur Herstellung des pulverförmigen Aminoplastleimharzes nach einem der Ansprüche 1 bis 8, dadurch gekennzeichnet, daß man das Harnstoff-Formaldehydharz und das Melamin-Formaldehydharz getrennt voneinander sprühtrocknet und bei einer Temperatur von weniger als 30°C zusammen mit dem Harnstoff und dem hydrophoben oder hydrophilen Siliciumdioxid vermischt.

11. Verfahren zur Herstellung des pulverförmigen Aminoplastleimharzes nach Anspruch 9, dadurch gekennzeichnet, daß man eine Mischung aus Harnstoff-Formaldehydharz, Melamin-Formaldehydharz, Harnstoff und hydrophilem Siliciumdioxid herstellt und diese Mischung sprühtrocknet.

12. Konfektioniertes pulverförmiges Aminoplastleimharz, enthaltend ein pulverförmiges Aminoplastleimharz nach einem der Ansprüche 1 bis 9, einen Härter und gegebenenfalls einen Fugenfüller.

13. Pulverförmiges Aminoplastleimharz nach einem der Ansprüche 1 bis 9 in Abmischung mit anderen, üblichen Klebemitteln.

## Claims

1. A pulverulent aminoplast adhesive resin for wood-based materials, having a low formaldehyde emission, which comprises a mixture of
   a) from 40 to 75 parts by weight of a urea/formaldehyde resin having a molar ratio of urea to formaldehyde of from 1:1.4 to 1:2,
   b) from 10 to 20 parts by weight of a melamine/formaldehyde resin having a molar ratio of melamine to formaldehyde of from 1:1.3 to 1:3,
   c) from 15 to 25 parts by weight of milled urea and
   d) from 0.3 to 10 parts by weight of a hydrophobic or hydrophilic silica and not more than 10 parts by weight of water and, if required, not more than 10 parts by weight of other additives, the parts by weight of the components adding up to 100.

2. A pulverulent aminoplast adhesive resin as claimed in claim 1, which is a mixture of
   a) from 60 to 68 parts by weight of a urea/formaldehyde resin having a molar ratio of urea to formaldehyde of from 1:1.4 to 1:1.8,
   b) from 12 to 16 parts by weight of a melamine/ formaldehyde resin having a molar ratio of melamine to formaldehyde of from 1:1.3 to 1:1.8,
   c) from 16 to 22 parts by weight of milled urea and
   d) from 0.5 to 2 parts by weight of a hydrophilic or hydrophobic silica, and not more than 10 parts by weight of water and, if required, not more than 10 parts by weight of other additives.

3. A pulverulent aminoplast adhesive resin as claimed in claim 1 or 2, wherein

a) the urea/formaldehyde resin has a molar ratio of urea to formaldehyde of about 1:1.6 and

b) the melamine/formaldehyde resin has a molar ratio of melamine to formaldehyde of about 1:1.5.

4. A pulverulent aminoplast adhesive resin as claimed in any of claims 1 to 3, wherein the urea has a mean particle size of less than 0.1 mm.

5. A pulverulent aminoplast adhesive resin as claimed in any of claims 1 to 4, wherein the flow improver is a hydrophobic silica.

6. A pulverulent aminoplast adhesive resin as claimed in any of claims 1 to 4, wherein the flow improver is a hydrophilic silica.

7. A pulverulent aminoplast adhesive resin as claimed in any of claims 1 to 6, wherein the additive is a soluble sulfite or bisulfite in an amount of from 0.2 to 2 parts by weight, based on the total amount of the resin components.

8. A pulverulent aminoplast adhesive resin as claimed in claim 7, which contains an alkali metal sulfite or bisulfite or an ammonium sulfite or bisulfite.

9. A pulverulent aminoplast adhesive resin as claimed in any of claims 1 to 8, which contains from 3 to 10 parts by weight of a hydrophilic silica as flow improver.

10. A process for the preparation of a pulverulent aminoplast adhesive resin as claimed in any of claims 1 to 8, wherein the urea/formaldehyde resin and the melamine/formaldehyde resin are spray-dried separately from one another and mixed with the urea and the hydrophobic or hydrophilic silica at below 30°C.

11. A process for the preparation of a pulverulent aminoplast adhesive resin as claimed in claim 9, wherein a mixture of a urea/formaldehyde resin, a melamine/formaldehyde resin, urea and hydrophilic silica is prepared and this mixture is spray-dried.

12. A compounded pulverulent aminoplast adhesive resin, containing a pulverulent aminoplast adhesive resin as claimed in any of claims 1 to 9, a curing agent and, if required, a joint filler.

13. A pulverulent aminoplast adhesive resin as claimed in any of claims 1 to 9, mixed with other conventional adhesives.

**Revendications**

1. Résine-colle à base d'aminoplaste, pulvérulente, pour matériaux dérivés du bois, à faible dégagement de formaldéhyde, caractérisée en ce que la résine est constituée d'un mélange de

a) 40 à 75 parties en poids d'une résine urée-formaldéhyde dont le rapport molaire de l'urée au formaldéhyde varie de 1:1,4 à 1:2;

b) 10 à 20 parties en poids d'une résine mélamine-formaldéhyde d'un rapport molaire de la mélamine au formaldéhyde de 1:1,3 à 1:3;

c) 15 à 25 parties en poids d'urée moulue; et

d) 0,3 à 10 parties en poids d'un dioxyde de silicium hydrophobe ou hydrophile;

de même que d'eau, en proportions allant jusqu'à 10 parties en poids et, le cas échéant, jusqu'à 10 parties en poids d'autres additifs, les parties en poids des constituants d'additionnant en un total de 100.

2. Résine-colle à base d'aminoplaste, pulvérulente, suivant la revendication 1, caractérisée en ce qu'il s'agit d'un mélange de

a) 60 à 68 parties en poids d'une résine urée-formaldéhyde d'un rapport molaire de l'urée au formaldéhyde de 1:1,4 à 1:1,8;

b) 12 à 16 parties en poids d'une résine mélamine-formaldéhyde d'un rapport molaire de la mélamine au formaldéhyde de 1:1,3 à 1:1,8;

c) 16 à 22 parties en poids d'urée moulue; et

d) 0,5 à 2 parties en poids d'un dioxyde de silicium hydrophile ou hydrophobe;

ainsi que d'eau en proportions jusqu'à 10 parties en poids et, le cas échéant, jusqu'à 10 parties en poids d'autres additifs.

3. Résine-colle à base d'aminoplaste, pulvérulente, suivant l'une des revendications 1 ou 2, caractérisée en ce que

a) la résine urée-formaldéhyde présente un rapport molaire de l'urée au formaldéhyde d'environ 1:1,6 et

b) la résine mélamine-formaldéhyde présente un rapport molaire de la mélamine au formaldéhyde d'environ 1:1,5.

4. Résine-colle à base d'aminoplaste, pulvérulente, suivant l'une des revendications 1 à 3, caractérisée en ce que l'urée présente un calibre des grains moyen inférieur à 0,1 mm.

5. Résine-colle à base d'aminoplaste, pulvérulente, suivant l'une des revendications 1 à 4, caractérisée en ce que l'adjuvant de fluidité est un dioxyde de silicium hydrophobe.

6. Résine-colle à base d'aminoplaste, pulvérulente, suivant l'une des revendications 1 à 4, caractérisée en ce que l'adjuvant de fluidité est un dioxyde de silicium hydrophile.

7. Résine-colle à base d'aminoplaste, pulvérulente, suivant l'une des revendications 1 à 6, caractérisée en ce qu'elle contient, à titre d'additif, un hydrogénosulfite ou un sulfite soluble, en une proportion de 0,2 à 2 parties en poids, calculée par rapport à la quantité totale des constituants de la résine.

8. Résine-colle à base d'aminoplaste, pulvérulente, suivant la revendication 7, caractérisée en ce qu'elle contient un sulfite ou un hydrogénosulfite de métal alcalin ou d'ammonium.

9. Résine-colle à base d'aminoplaste, pulvérulente, suivant l'une des revendications 1 à 8, caractérisée en ce qu'elle contient de 3 à 10 parties en poids de dioxyde de silicium hydrophile (acide silicique) comme adjuvant de fluidité.

10. Procédé d'obtention de la résine-colle à base d'aminoplaste, pulvérulente, suivant l'une des revendications 1 à 8, caractérisé en ce qu'on sèche la résine urée-formaldéhyde et la résine mélamine-formaldéhyde séparément par pulvérisation et on les mélange à l'urée et au dioxyde de silicium hydrophobe ou hydrophile, à une température inférieure à 30°C.

11. Procédé d'obtention de la résine-colle à base d'aminoplaste, pulvérulente, suivant la revendication 9, caractérisé en ce qu'on prépare un mélange de résine urée-formaldéhyde, de résine mélamine-formaldéhyde, d'urée et de dioxyde de silicium hydrophile et en ce qu'on sèche ce mélange par pulvérisation.

12. Résine-colle à base d'aminoplaste, pulvérulente, prête à l'emploi, contenant une résine-colle à base d'aminoplaste, pulvérulente, suivant l'une des revendications 1 à 9, un agent de durcissement et éventuellement un agent de remplissage des jointures ou joints.

13. Résine-colle à base d'aminoplaste, pulvérulente, suivant l'une des revendications 1 à 9, en mélange à d'autres agents de collage usuels.